# FASCICULE DE BREVET EUROPEEN

(11) **EP 2 915 454 B1**
(45) Date de publication et mention de la délivrance du brevet: **21.09.2016**
(21) Numéro de dépôt: 15305312.9
(22) Date de dépôt: 02.03.2015
(51) Int. Cl.: A47C 7/00, B60B 33/06

(54) **Meuble équipé de moyens de déplacement**
Möbel ausgestattet mit Verschiebeeinrichtung
Furniture equipped with displacement means

(30) Priorité: 04.03.2014 FR 1451737
(43) Date de publication de la demande: 09.09.2015
(73) Titulaire: Sunset Creation, 24150 Lalinde (FR)
(72) Inventeur: Le Roux, Olivier, 24100 Bergerac (FR)
(74) Mandataire: Aquinov

(56) Documents cités:
- WO-A1-85/05020
- DE-U1- 20 012 836
- FR-A1- 2 985 420
- GB-A- 2 452 798
- GB-A- 2 465 172
- US-A1- 2002 144 846

## Description

La présente invention vise un dispositif de déplacement d'un meuble, notamment d'une chaise.

Dans les maisons de retraite notamment et plus généralement dans les organismes de soins, les maisons pour personnes à mobilité réduite, il se pose un problème lors des déplacements de ces personnes une fois assises, afin de les positionner autour d'une table.

En effet, pour permettre la mise en place de l'utilisateur sur une chaise, cette chaise est reculée par rapport à la table. L'utilisateur est ensuite conduit à s'assoir seul ou avec l'aide d'un personnel d'assistance.

Une fois assis sur ladite chaise, il convient de rapprocher ladite personne sur sa chaise pour la positionner de façon adaptée avec les jambes sous la table et les avants bras au droit de la table.

Cette manoeuvre requiert un effort physique important même s'il n'est pas question de soulever la chaise avec son utilisateur. Néanmoins le glissement reste souvent très difficile. Une solution consiste à soulager le poids à faire glisser en levant les pieds de la chaise en amont par rapport au sens de déplacement.

Cette manoeuvre est toujours un peu risquée car il ne faut surtout pas provoquer un basculement de l'ensemble chaise/utilisateur. L'idéal est de réaliser cette manoeuvre à deux assistants, disposés de part et d'autre de ladite chaise.

Le problème est que le personnel est de plus en plus limité en nombre et surtout il faudrait pouvoir faire très rapidement toutes les mises en place à table des différents utilisateurs, ce qui peut s'avérer long et fastidieux. Cette manoeuvre est donc la plupart du temps réalisée avec un seul opérateur.

Dans tous les cas, cette manoeuvre requiert un effort physique relativement important d'une part et la répétitivité comme le défaut d'ergonomie conduisent à des traumatismes du type musculo-squelettique et à des problèmes de santé à long terme, d'autre part.

Il existe une solution qui consiste à placer sur roulettes lesdites chaises mais il faut pouvoir les immobiliser en rotation pendant la phase d'assise, à les libérer pour le roulage et à les immobiliser après mise en place.

Il faut donc actionner le blocage ou le déblocage plusieurs fois.

Surtout un tel agencement n'est pas compatible avec du mobilier meublant comme des chaises dans une salle à manger ou un salon d'un hôpital ou un salon d'une maison de retraite.

En effet, il ne s'agit pas là du mobilier médicalisé avec toute sa technicité, il faut pouvoir conserver audit mobilier son esthétique et son côté convivial.

L'adaptation sur du mobilier existant reste difficile.

Les roulettes avec blocage mécanique sont à proscrire, sans compter qu'il faut les manoeuvrer.

Il subsiste aussi le risque de ne pas assurer un blocage des roues par oubli notamment dans le cas d'une mise en place rapide de nombreuses personnes. De plus ces manoeuvres doivent être.répétées pour le dégagement de ces mêmes personnes hors de table.

Une autre solution est présentée dans la demande de brevet FR 2 985 420 qui propose de disposer sur les pieds avant de la chaise des roulettes orientables. Sur les pieds arrière, cette invention propose un dispositif avec une roulette centrale escamotable, solidaire d'une pédale basculante entre deux positions stables l'une dans laquelle la roulette est escamotée et l'autre dans laquelle la roulette est en saillie.

Ce dispositif est attrayant car il solutionne le problème du soulagement du poids de la chaise et de son utilisateur pour l'assistant mais il répond de façon incomplète car la chaise ne revient pas automatiquement en position de roulette escamotée pour reposer sur ses pieds arrière, seule manoeuvre dans laquelle la chaise ne bouge plus.

Lors du roulage si l'assistant trébuche ou pousse la chaise qui lui échappe, la chaise peut continuer à rouler puisqu'il n'y a pas de freinage, ce qui n'est pas satisfaisant vu la population concernée. Il faut donc pouvoir lutter contre les déplacements intempestifs. Une autre demande de brevet WO 85/05020 propose de positionner une paire de roulettes sous les pieds avant seulement et de soulever l'arrière de la chaise pour faire avancer ladite chaise même chargée d'une personne.

GB 2 465 172. A décrit un meuble selon la préambule de la revendication 1.

Afin de prévenir tout basculement excessif, il est prévu des butées en avant du pied avant. Cet agencement ne permet aucunement de déplacer ladite chaise sans effort.

La présente invention propose un agencement avec un dispositif de déplacement muni de moyens de déplacement tels que des roues ou des patins à faible coefficient de friction, montés sur les roues arrière qui peuvent prendre une position escamotée stable et une position en saillie, instable. Ce dispositif comprend des moyens de manoeuvre de ce dispositif de déplacement.

L'invention est maintenant décrite en détail suivant un mode de réalisation particulier, non limitatif, cette description s'appuyant sur les dessins annexés, dessins sur lesquels les différentes figures représentent :
- Figure 1 : une vue en élévation latérale d'une chaise équipée du dispositif de déplacement selon la présente invention, lors de son utilisation
- Figure 2 : une vue de l'avant du dispositif de la figure 1,
- Figure 3 : une vue en perspective de l'arrière du dispositif de la figure 1,
- Figure 4 : une vue de détail en éclaté de l'arrière du dispositif de la figure 1, avec une loupe de l'excentrique
- Figures 5A à 5E : un synoptique des différentes phases d'une manoeuvre à l'aide du dispositif des figures 1 à 4.

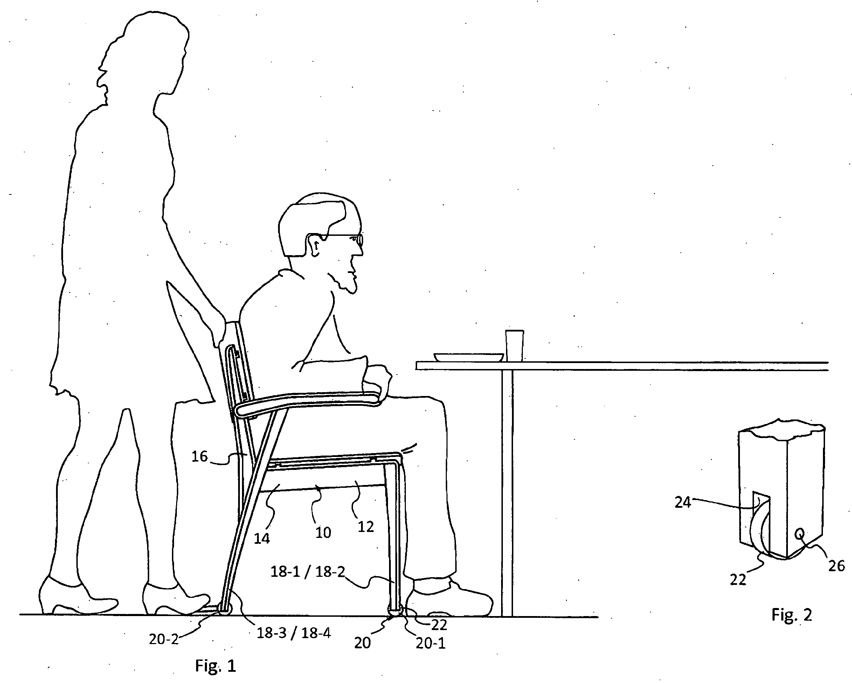

Sur la figure 1, on a représenté un meuble 10 en l'occurrence une chaise 12, sachant que la description est appliquée à une chaise avec la problématique d'une mise à table car cet exemple est le plus pertinent.

La chaise 12 concernée comprend une assise 14, un dossier 16 et quatre pieds 18-1, 18-2 avant et 18-3, 18-4 arrière.

Dans le mode de réalisation représenté, les pieds 18-1, 18-2 avant sont équipés de moyens 20 de déplacement. On appelle "moyens 20 de déplacement" pour la suite de la description tout moyen tel que roulettes ou patins, apte à permettre un déplacement au sol par roulage ou glissement, sans effort.

En l'occurrence, les moyens 20-1 avant de déplacement retenus sont des roulettes 22. Ces roulettes 22 sont disposées dans un logement 24 en U renversé, ménagé dans l'extrémité du pied, de façon à former une chape avec les branches dudit U. voir la loupe de la figure 1 et 2. Un axe 26 traverse les branches du U et sert d'axe de rotation pour la roulette 22 qu'il porte. Ces roulettes sont donc libres en rotation.

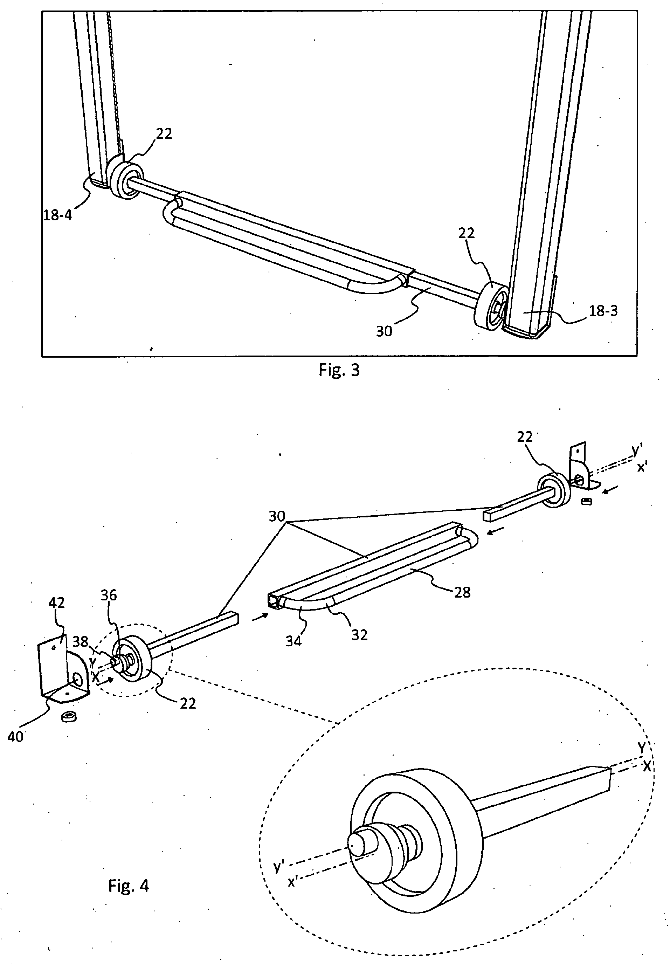

Sur les pieds 18-3, 18-4 arrière, il est disposé des moyens 20-2 de déplacement arrière, équipés de moyens 28 de manoeuvre, escamotables, aptes à prendre une position escamotée stable et une position en saillie instable. Voir figures 3 et 4.

Ces moyens 28 de manoeuvre comprennent au moins une roulette 22, en l'occurrence deux roulettes 22, disposées à proximité des pieds 18-3,18-4 arrière.

Ces roulettes 22 sont portées par un même arbre 30 et sont montées libres en rotation. Cet arbre définit un axe XX'.

Cet arbre 30 porte une pédale 32 de manoeuvre au pied, qui est décentrée par rapport audit axe 30, de façon à faire levier.

En l'occurrence, il s'agit d'un arceau 34 orienté vers l'arrière de la chaise de façon à être accessible au pied, par l'arrière de ladite chaise.

L'arbre 30 est lui-même solidaire à ses deux extrémités d'un excentrique 36. Chaque excentrique 36 reçoit de façon centrée et solidaire l'arbre 30 d'un côté et possède un pion 38 excentré pour conférer la fonction excentrique de l'autre côté.

Les deux pions 38 sont alignés pour définir un axe YY'.

Cet axe YY' est donc parallèle à l'axe XX'.

Dans l'agencement représenté, l'axe YY' est positionné vers l'avant par rapport à l'axe XX'.

Quant aux pions, 38, ils coopèrent avec un logement 40, ménagé dans chacun des pieds arrière et destiné à les recevoir. Ce logement 40 peut être ménagé directement dans le pied ou peut être ménagé dans une pièce 42, par exemple métallique, rapportée sur le pied par vissage.

L'axe XX' peut donc pivoter autour de l'axe YY'.

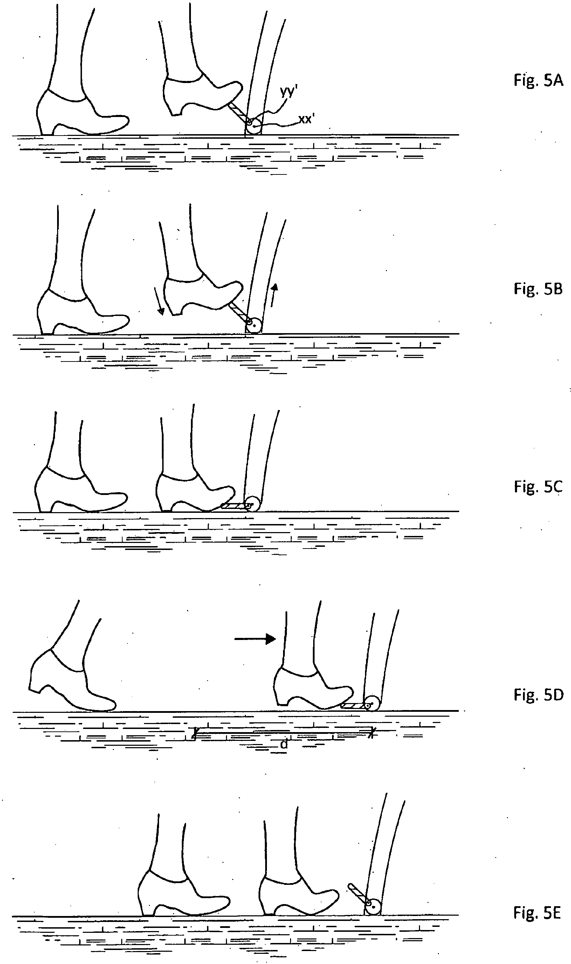

La pédale 32 de manoeuvre est alors orientée vers le haut lorsque les roulettes sont au sol. Le synoptique du fonctionnement est décrit sur la figure 5 avec les différentes étapes.

Lorsque l'assistant a placé la chaise écartée de la table, elle est dans la position stable de la figure SA. Dans ce cas, la chaise repose sur les roulettes 22 des pieds 18-1, 18-2 avant et sur les pieds 18-3, 18-4 arrière. Les roulettes 22 des moyens 20-2 arrière de déplacement sont en appui sur le sol, de façon libre, donc en position escamotée par rapport au plan des pieds, c'est-à-dire sans action. La pédale 32 de manoeuvre est relevée.

De ce fait, l'utilisateur de la chaise peut s'asseoir comme sur une chaise non équipée, sans risque de mouvement intempestif de ladite chaise.

L'assistant peut ainsi se préoccuper intégralement de l'utilisateur.

L'utilisateur est alors assis et son poids ne fait que renforcer l'appui et donc la stabilité. Dans cette position, l'assistant peut alors agir sur la pédale 32 de manoeuvre avec le pied tout en conservant les mains libres pour tenir le dossier. Voir figure 5B.

En appuyant sur la pédale 32 de manoeuvre, l'assistant fait pivoter l'axe XX¹ des roulettes 22 des moyens 20-2 arrière de déplacement autour de l'axe YY'. Voir figure 5C.

De ce fait il existe un bras de levier de la distance entre les deux axes XX¹ et YYⁱ, et de celui généré par la pédale, ce qui provoque, sous l'action de l'assistant, le soulèvement des pieds arrière par rapport aux roulettes en appui sur le sol, les roulettes étant alors en saillie par rapport au plan des pieds. On remarque aussi qu'une partie du poids seulement est à reprendre puisqu'une partie de ce poids est reporté sur les roulettes avant.

Cet effort est donc très limité et la jambe peut exercer un effort très important sans difficulté, avec en plus, la démultiplication par le bras de levier : tout assistant peut y arriver aisément.

La chaise se retrouve sur quatre roulettes et peut donc être translatée sur une courte distance d. Voir figure 5D.

En effet, il faut que l'assistant actionne la pédale 32 de manoeuvre pour que la chaise se maintienne sur lesdites roulettes, donc l'assistant conserve toujours un pied au sot garant de sa stabilité et d'une ampleur de déplacement limitée.

Si nécessaire bien sûr, la manoeuvre de mise en saillie des roulettes des moyens 20-2 arrière de déplacement peut se renouveler autant de fois que nécessaire pour couvrir la distance d'approche, l'assistant se rapprochant de la chaise à chaque manoeuvre.

Il est à noter que la distance à franchir est généralement très courte, inférieure à 1 m pour donner un ordre de grandeur.

Dès que la pression sur la pédale 32 de manoeuvre est relâchée, la chaise est de nouveau stable, sans risque de déplacement intempestif. Voir figure 5E. L'assistant peut alors ramener le pied arrière.

L'avantage du dispositif de déplacement selon la présente invention est la mise en saillie dans une position instable des roulettes des moyens 20-2 arrière de déplacement, évitant ainsi tout risque de déplacement intempestif sur 4 roulettes, évitant les manoeuvres non ergonomiques des roulettes par l'assistant, évitant l'oubli de ramener la chaise dans une configuration stable. Le retour à la position stable est automatique, sans aucune action positive.

Si l'assistant perd l'équilibre et n'appuie plus sur la pédale de manoeuvre, quelle qu'en soit la raison, la chaise revient immédiatement en position stable sécuritaire.

L'assistant reste dans une position parfaitement ergonomique, droit, ne sollicite aucunement son dos, ne fait aucun effort musculaire important.

Selon la présente invention il est possible de prévoir des perfectionnements sous la forme de moyens de rappel qui ramènent les roulettes en position escamotée mais sans contact avec le sol. Ainsi, lorsque la chaise est déplacée et soulevée à vide, les roulettes n'ont pas tendance à basculer vers le bas. L'effort de rappel est très limité et ne vient pas perturber la manoeuvre de l'assistant.

De la même façon pour permettre non seulement une translation de la chaise mais aussi une orientation, les roulettes associées aux pieds 18-1, 18-2 avant peuvent être orientables. De fait l'esthétique est plus discutable mais fonctionnellement, cela ne pose aucun problème.

De même, les pieds 18-3, 18-4 arrière peuvent comporter des butées en un matériau anti glissement tel que du caoutchouc pour assurer une parfaite immobilisation lorsque la chaise repose sur ses pieds arrière.

Le dispositif est adapté aussi à certains autres meubles comme un coffre afin d'en permettre le déplacement.

Les roulettes mentionnées peuvent être remplacées par des moyens de glissement tels que des patins en matériau à faible coefficient de frottement, notamment du polytétrafluoroéthylène connu sous la marque commerciale Téflon.

L'agencement dépend aussi du revêtement de sol.

On note que le dispositif selon l'invention peut être adapté à du matériel existant et il est donc possible de rapporter le dispositif sur des meubles, notamment des chaises, déjà utilisés et en service.

De la même façon, suivant un perfectionnement, il est prévu une butée de sorte que la pédale 32 de manoeuvre ne vienne pas frotter au sol et éventuellement marquer ledit sol ou laisser des traces.

## Revendications

1. Meuble (12) comprenant quatre pieds (18-1, 18-2) avant et (18-3, 18-4) arrière équipés de moyens de déplacement, les moyens de déplacement (20-2) arrière étant équipés de moyens (28) de manoeuvre, escamotables, les moyens (28) de manoeuvre comprennent au moins une roulette (22), portée par un arbre (30) définissant un axe XX' et montée libre en rotation, **caractérisé en ce que** les extrémités dudit arbre portant des excentriques (36) avec chacun un pion (38) solidaire des pieds (18-3, 18-4) arrière, définissant un axe YY' positionné vers l'avant par rapport à l'axe XX' de sorte que lesdits moyens de déplacement peuvent prendre une position escamotée stable et une position en saillie instable.

2. Meuble (10), selon la revendication 1, **caractérisé en ce que** l'arbre (30) porte une pédale (32) de manoeuvre au pied, décentrée par rapport audit axe XX' dudit arbre (30).

3. Meuble (10) selon la revendication 2, **caractérisé en ce que** la pédale (32) de manoeuvre comprend un arceau (34) orienté vers l'arrière, de façon à être accessible au pied.

4. Meuble (10) selon la revendication 2 ou 3, **caractérisé en ce que** les pions (38) solidaires des pieds (18-3, 18-4) arrière, coopèrent avec des logements (40), ménagés dans chacun des pieds.

5. Meuble (10) selon la revendication 2 ou 3, **caractérisé en ce que** les pions (38) solidaires des pieds (18-3, 18-4) arrière, coopèrent avec des logements (40) ménagés dans une pièce (42) rapportée sur le pied.

6. Meuble (10) selon l'une quelconque des revendications précédentes, **caractérisé en ce que** les moyens de déplacement (20-1) des pieds (18-1, 18-2) avant et les moyens de déplacement (20-2) des pieds (18-3, 18-4) arrière comprennent des roulettes (22), montées libres en rotation.

7. Meuble (10) selon l'une quelconque des revendications précédentes, **caractérisé en ce que** les moyens de déplacement des pieds (18-1, 18-2) avant et des pieds (18-3, 18-4) arrière comprennent des patins à faible coefficient de frottement.

8. Meuble (10) selon l'une quelconque des revendications 1 à 7 est une chaise.

## Patentansprüche

1. Möbel (12) mit vier Füßen, vorne (18-1, 18-2) und hinten (18-3, 18-4), das mit Verschiebemitteln ausgestattet ist, wobei die hinteren Verschiebemittel (20-2) mit einklappbaren Mitteln (28) zum Betätigen ausgestattet sind und wobei die Mittel (28) zum Verfahren wenigstens eine Rolle (22) aufweisen, die von einer Welle (30) gehalten ist, die eine Achse XX¹ definiert, und die frei drehbar gelagert ist, **dadurch gekennzeichnet, dass** die Enden der Welle Exzenter (36) mit jeweils einem Zapfen (38) aufweisen, die an den hinteren Füßen (18-3, 18-4) angebracht sind und eine Achse YY' definieren, die bezüglich der Achse XX¹ derart nach vorne versetzt ist, dass die Verschiebemittel eine eingeklappte, stabile Stellung und eine ausgeklappte, instabile Stellung einnehmen können.

2. Möbel (10) nach Anspruch 1, **dadurch gekennzeichnet, dass** die Welle (30) ein Pedal (32) für die Betätigung per Fuß aufweist, das bezüglich der Achse XX¹ der Welle (30) dezentriert ist.

3. Möbel (10) nach Anspruch 2, **dadurch gekennzeichnet, dass** das Pedal (32) für die Betätigung einen Bügel (34) aufweist, der nach hinten ausgerichtet ist, um auf diese Weise für den Fuß zugänglich zu sein.

4. Möbel (10) nach Anspruch 2 oder 3, **dadurch gekennzeichnet, dass** die Zapfen (38), die an den hinteren Füßen (18-3, 18-4) angebracht sind, mit Lagern (40) zusammenwirken, die jeweils in den Füßen ausgebildet sind.

5. Möbel (10) nach Anspruch 2 oder 3, **dadurch gekennzeichnet, dass** die Zapfen (38), die an den hinteren Füßen (18-3, 18-4) angebracht sind, mit Lagern (40) zusammenwirken, die in einem Stück (42) ausgebildet sind, das an den Fuß angesetzt ist.

6. Möbel (10) nach einem der vorhergehenden Ansprüche, **dadurch gekennzeichnet, dass** die Verschiebemittel (20-1) der vorderen Füße (18-1, 18-2) und die Verschiebemittel (20-2) der hinteren Füße (18-3, 18-4) frei drehbare Rollen (22) aufweisen.

7. Möbel (10) nach einem der vorhergehenden Ansprüche, **dadurch gekennzeichnet, dass** die Verschiebemittel der vorderen Füße (18-1, 18-2) und der hinteren Füße (18-3, 18-4) Gleitmittel mit einem niedrigen Reibungskoeffizienten aufweisen.

8. Möbel (10) nach einem der Ansprüche 1 bis 7, das ein Stuhl ist.

## Claims

1. An item of furniture (12) including four front (18-1, 18-2) and back (18-3, 18-4) feet equipped with movement means, the back movement means (20-2) being equipped with retractable manoeuvring means (28), the manoeuvring means (28) including at least one wheel (22), carried by a shaft (30) defining an axis XX' and mounted so as to be able to rotate freely, **characterised in that** the ends of said shaft carrying eccentrics (36) each with a pin (38) secured to the back legs (18-3, 18-4), define an axis YY' positioned towards the front with respect to the axis XX' so that said movement means can adopt a stable retracted position and an unstable projecting position.

2. An item of furniture (10) according to claim 1, **characterised in that** the shaft (30) carries a pedal (32) for manoeuvring by foot, off centre with respect to said axis XX' of said shaft (30).

3. An item of furniture (10) according to claim 2, **characterised in that** the manoeuvring pedal (32) comprises an arch (34) oriented towards the rear, so as to be accessible to the foot.

4. An item of furniture (10) according to claim 2 or 3, **characterised in that** the pins (38) secured to the back legs (18-3, 18-4) cooperate with housings (40) provided in each of the legs.

5. An item of furniture (10) according to claim 2 or 3, **characterised in that** the pins (38) secured to the back feet (18-3, 18-4) cooperate with housings (40) provided in a part (42) attached to the foot.

6. An item of furniture (10) according to any of the preceding claims, **characterised in that** the movement means (20-1) of the front feet (18-1, 18-2) and the movement means (20-2) of the back feet (18-3, 18-4) comprise wheels (22) mounted so as to be able to rotate freely.

7. An item of furniture (10) according to any of the preceding claims, **characterised in that** the movement means of the front feet (18-1, 18-2) and of the back feet (18-3, 18-4) include rollers with a low coefficient of friction.

8. The item of furniture (10) according to any of clams 1 to 7 is a chair.
